# EUROPEAN PATENT SPECIFICATION

(11) **EP 3 563 534 B1**
(45) Date of publication and mention of the grant of the patent: **20.07.2022**
(21) Application number: 17887956.5
(22) Date of filing: 29.11.2017
(51) Int. Cl.: G06F 9/455, G06F 9/54, G06F 15/173

(54) **TRANSFERRING PACKETS BETWEEN VIRTUAL MACHINES VIA A DIRECT MEMORY ACCESS DEVICE**
ÜBERTRAGUNG VON PAKETEN ZWISCHEN VIRTUELLEN MASCHINEN ÜBER EINE DIREKTSPEICHERZUGRIFFSVORRICHTUNG
TRANSFERT DE PAQUETS ENTRE DES MACHINES VIRTUELLES PAR L'INTERMÉDIAIRE D'UN DISPOSITIF D'ACCÈS DIRECT À LA MÉMOIRE

(30) Priority: 27.12.2016 US 201615391777
(43) Date of publication of application: 06.11.2019
(73) Proprietor: Intel Corporation, Santa Clara, CA 95054 (US)
(72) Inventor: CONNOR, Patrick, Beaverton, Oregon 97007 (US); DUBAL, Scott P., Beaverton, Oregon 97007 (US); TAMIR, Eliezer, 99620 Biet Shemesh (IL); PAVLAS, Chris, Hillsboro, Oregon 97123 (US); GASPARAKIS, Iosif, Hillsboro, Oregon 97214 (US); HEARN, James R., Hillsboro, Oregon 97124 (US)
(74) Representative: Rummler, Felix
(86) International application number: PCT/US2017/063713
(87) International publication number: WO 2018/125490

(56) References cited:
- US-A1- 2009 282 300
- US-A1- 2012 216 188
- US-A1- 2012 278 803
- US-A1- 2016 012 003
- US-A1- 2016 110 214
- US-B1- 8 990 799

## Description

### BACKGROUND

US8990799B1 relates to a virtual switch implemented in a NIC. Packets which are addressed to the broadcast or a multicast address may be copied to all virtual machines associated with the virtual switch or may be passed to the NIC device driver so that it may be copied by software. The NIC operates in a selective mode whereby packets that are not addressed to a supported virtual machine are rejected or discarded. Further, the virtual switch routes the packets to the virtual machines by performing a DMA copy operation to dedicated memory associated with the virtual machine to which the packet is addressed. The NIC may also include dedicated memory for each supported MAC address in order to facilitate operation.

### SUMMARY

The invention is defined in the claims. In the following description, any embodiment referred to and not falling within the scope of the claims is merely an example useful to the understanding of the invention.

### BRIEF DESCRIPTION OF THE DRAWINGS

Fig. 1 is a block diagram of an example computer arrangement of techniques described herein;
Fig. 2 is a flow chart of an example method of performing communication between virtual machines according to techniques described herein;
Fig. 3 is an example system for transferring a packet via a direct memory access device;
Fig. 4 is a flow chart of an example method for transferring a packet; and
Fig. 5 is a block diagram showing computer readable media that store code for performing communication between virtual machines.

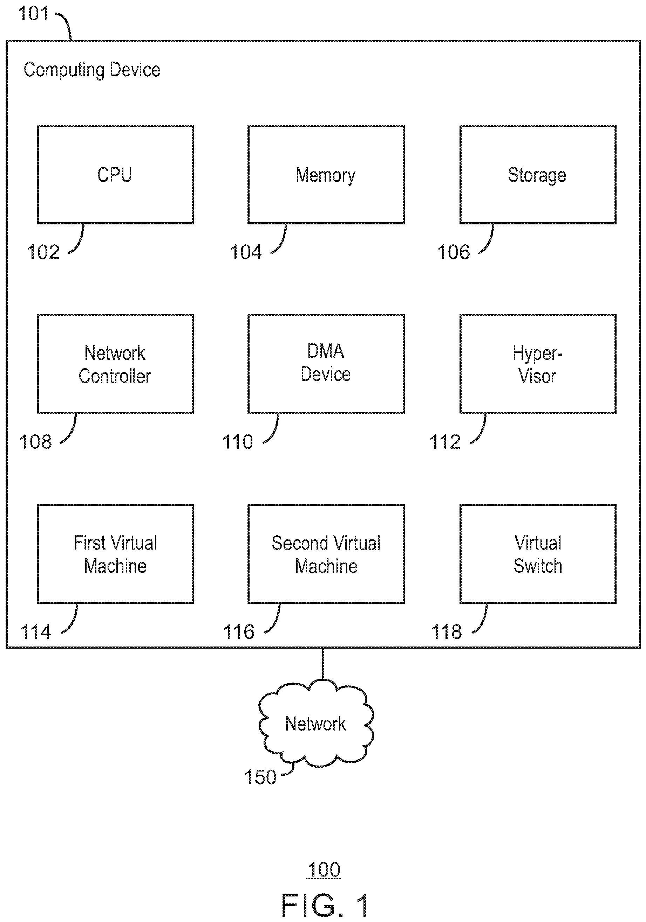

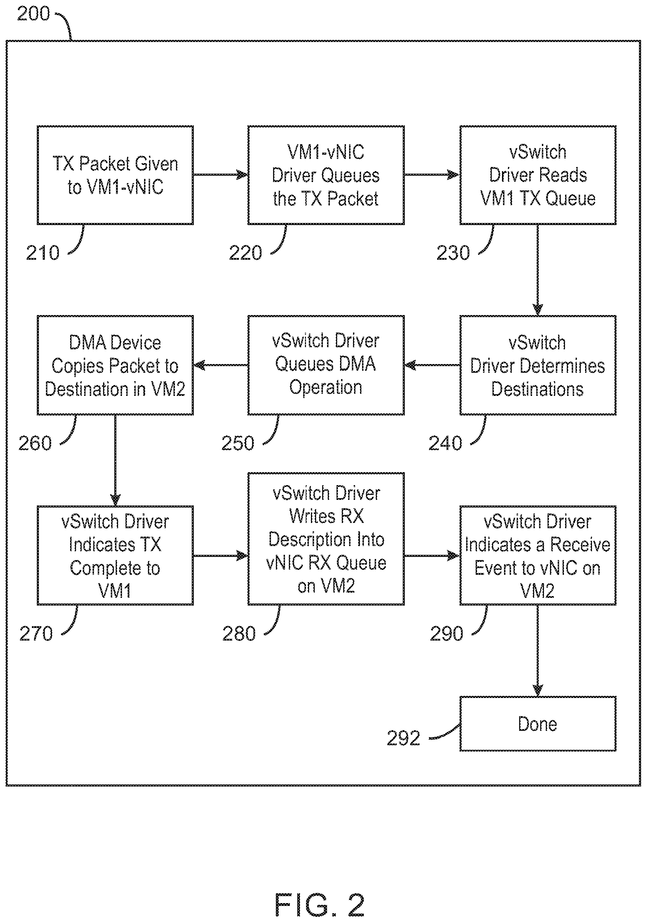

The same numbers are used throughout the disclosure and the figures to reference like components and features. Numbers in the 100 series refer to features originally found in Fig. 1; numbers in the 200 series refer to features originally found in Fig. 2; and so on.

### DESCRIPTION OF THE ASPECTS

As described above, communications between virtual machines (VM) to take place either in a virtual switch (vSwitch) environment or in a physical switch environment. However, larger amounts of VM-to-VM network traffic can quickly cause the vSwitch layer to become a performance bottleneck, and thus increase latency. In particular, increasing powerful servers are becoming loaded with greater numbers of virtual machines. The increasing number of VMs running in a physical server and the corresponding increased amount of VM-to-VM network traffic can quickly cause the vSwitch layer to become a performance bottleneck and may thus increase latency. The performance of the vSwitch may thus be a limiting factor preventing scale out of the number of VMs running on a given server. Central processing unit (CPU) cycles that are spent copying network packets from one VM to another may then not be available for use by the VMs for packet processing and other operations. Running the VMs on different non-uniform memory access (NUMA) nodes may cause processor interconnect congestion. For example, copying data via a CPU from one location to another may cause CPU stalls as the processors waits for memory to be accessed. Depending on the level of cache that the data resides in, there may be significant delays. Additionally, when a copy operation pulls this data into the copying cores cache and the next VM to access the data is running on another core or processor, then the data may be written back to memory before it can be accessed by the second core running the VM.

When communication between virtual machines takes place in a physical switch environment, hardware may be used to offload the vSwitch functions to a physical switch through a peripheral component interface network interface controller (pNIC). Offloading the vSwitch function to the physical switch through a pNIC may be referred to as hair pinning. Hair pinning may be performed using either a switch within the server or via a top of rack switch. However, hair pinning may also have performance limitations as well as considerable cost implications. Further, placing high traffic on a peripheral bus may introduce a security risk due to the possibility of malicious interference by hackers.

The techniques described herein relate generally to copying packets from one VM to another VM. In particular, techniques described herein can copy packets from one VM to another VM without burdening a CPU. In some examples, the techniques described herein can use a direct memory access (DMA) device to copy packets from VM to VM. As used herein, the direct memory access device can be any DMA engine, or any non-CPU agent, that can be used to copy packets from VM to VM within the scope of the techniques described herein. For example, in one embodiment, the DMA device can include I/O Acceleration Technology (I/OAT) by Intel^{®}, or may include any of the relevant components of the I/OAT. In some examples, after the vSwitch has determined the source and destination for a packet in VM-to-VM traffic, the packet transfer may become a memory copy operation. For example, a vSwitch may offload the memory copy function to a DMA device. Offloading the memory copy function to the DMA device may enable packets to be transferred from one VM to another VM without the CPU having to perform the copy operation and without having to use physical switch bandwidth. The techniques described herein may thus free up CPU cycles that may otherwise be used for data copies.

The techniques described herein may provide a solution to the problems associated with using a vSwitch. In some examples, the techniques described herein may incorporate a DMA device for copying packets from VM to VM. After the vSwitch has determined that the source and the destination for a packet are VMs on the same platform, the memory copy operation of a vSwitch can be offloaded to the DMA device to perform the memory copy function.

The techniques described herein may also leave the bulk of the vSwitch software unchanged. For example, the techniques described herein may be backward compatible with existing vSwitch hardware. The techniques described herein may enable the vSwitch to perform firewall operations, access control lists (ACLs), or encrypt and decrypt services. Thus, no changes to an existing software application may be made in order to realize the benefits of the techniques described herein.

Furthermore, the techniques described herein do not use peripheral bus bandwidth and does not burden a physical switch with VM-to-VM traffic. Thus, network traffic to and from the platform is less likely to encounter congestion. Also, the techniques described herein eliminate the cost, power, space, components, etc., associated with using a physical switch for intra-platform communications. Thus, the techniques described herein enable the switch to be provisioned for external traffic, rather than external and internal traffic.

Furthermore, the data moves according to the techniques described herein are memory transactions, and not Peripheral Component Interconnect Express (PCIe) transactions. The memory copies may thus be performed at full memory bandwidth speed. In addition, the copies may be more efficient and use less bandwidth than CPU copies because they do not involve moving data from the memory controller to the CPU, and CPU cycles are not wasted waiting for memory. The techniques described herein thus enable data copy by the chipset instead of the CPU to move data more efficiently through the server and provide fast, scalable and reliable throughput.

Fig. 1 illustrates an example computer arrangement including a computer system referred to generally by the reference number 100, and computer network 150. Computing device 101 includes a CPU 102 and a memory device 104. The computing device 101 may be, for example, a laptop computer, desktop computer, tablet computer, mobile device, or a server, among others. The computing device 101 may include a central processing unit (CPU) 102 that is configured to execute stored instructions, as well as a memory device 104 that stores instructions that are executable by the CPU 102. The CPU 102 may be coupled to the memory device 104 by a bus (not shown). Additionally, the CPU 102 can be a single core processor, a multi-core processor, a computing cluster, or any number of other configurations. Furthermore, the computing device 101 may include more than one CPU 102. In some examples, the CPU 102 may be a system-on-chip (SoC) with a multi-core processor architecture. In some examples, the CPU 102 can be a specialized digital signal processor (DSP) used for image processing. The memory device 104 can include random access memory (RAM), read only memory (ROM), flash memory, or any other suitable memory systems. For example, the memory device 104 may include dynamic random access memory (DRAM).

The memory device 104 can include random access memory (RAM), read only memory (ROM), flash memory, or any other suitable memory systems. For example, the memory device 104 may include dynamic random access memory (DRAM). In some examples, the DMA device 110 may be disposed in a memory controller (not shown) of the memory device 104. For example, the DMA device may be a DMA engine. In some examples, the memory device 104 can include random access memory (RAM), read only memory (ROM), flash memory, or any other suitable memory systems. For example, the memory device 104 may include dynamic random access memory (DRAM). The memory device 104 may include device drivers that are configured to execute the instructions for communication between virtual machines. The device drivers may be software, an application program, application code, or the like.

The computing device 101 may also include a storage device 106. The storage device 106 is a physical memory such as a hard drive, an optical drive, a thumbdrive, an array of drives, a solid-state drive, or any combinations thereof. The storage device 106 may also include remote storage drives.

The computing device 101 may also include a network interface controller (NIC) 108, a DMA device 110, a hypervisor 112, a first virtual machine 114, a second virtual machine 116, and a virtual switch 118. The NIC 108 may be configured to connect the computing device 101 through the bus to a network 150. The network 150 may be a wide area network (WAN), local area network (LAN), or the Internet, among others. In some examples, the device may communicate with other devices through a wireless technology. For example, the device may communicate with other devices via a wireless local area network connection. In some examples, the device may connect and communicate with other devices via Bluetooth^{®} or similar technology.

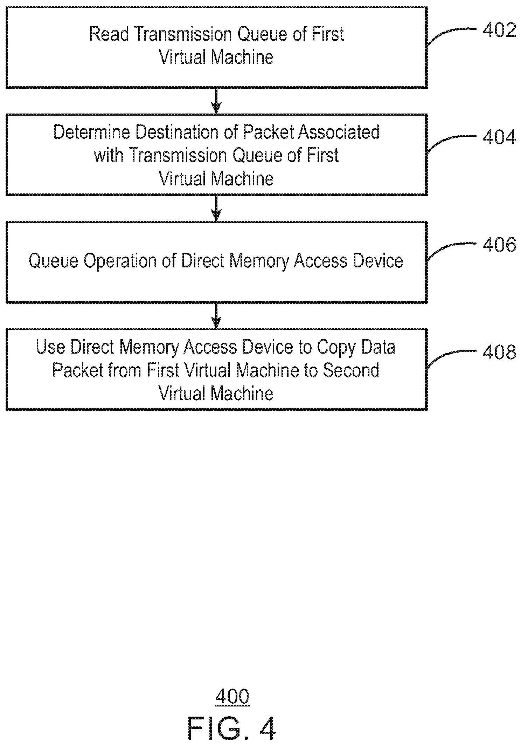

In some examples, in order to initialize computer system 100, the vSwitch 118 can be initialized. In some examples, all virtual ports and all physical ports can be initialized. The DMA device 110 can then be initialized. In some examples, the DMA device 110 may note virtual and physical ports, together with their MAC addresses, for packet forwarding. In some examples, packet forwarding may be performed via the DMA device 110 or a physical port. In some examples, the link status of any port may then be presented. From this point onward, the vSwitch 118 and the DMA device 110 may be initialized. In some examples, if a user adds another port, the additional port may also be initialized. One or more packets may then be transferred between the first virtual machine 114 and the second virtual machine 116 according to the methods 200 and 400 described in Figs. 2 and 4 below.

In some examples, overlays may be able to receive and transmit on ports that belong to the same virtual network. For example, overlays can include Virtual Extensible Local Area Network (VxLAN) and Generic Routing Encapsulation (GRE) Termination End Points (TEPs). In some examples, as long this condition is met, the presence of the DMA device 110 may be abstracted from the implementation of the virtual tunnel end point (VTEP), also known as the VxLAN gateway.

The techniques described herein may enable the use of a non-paged memory pool, because typically data does not go to a user page. Rather, the data may goes to a VM kernel page. The techniques described herein may also enable pre-pinning a pool of pages and recycling them, thus the cost may also be negligible.

Packet transfers, unlike software copies in the protocol stack, may be designed to be sent to peripheral devices via DMA operations. The stack may be designed for packet transfer processes to be asynchronous. The transmitting VM may thus continue to do productive work while the packet is queued and transferred. Similarly, a receiving VM may be available for tasks during the transfer and may become aware of the received packet only after the transfer is complete. Advantageously, the CPU, which may be used for other operations, may not be kept busy copying the packet and thus be available for the other operations.

In some examples, the techniques described herein may also include collaboration with an input-output memory management unit (IOMMU) (not shown). An IOMMU can be a software or a hardware unit that can be used to re-map host addresses to input-output (IO) devices. In a virtualized environment, an IOMMU may be used to enforce security policies, when a VM queues data to be transferred to another VM. The IOMMU may allow the VM to only be able to specify a "from" address in its own space and a "to" address in the intended VM's address. Otherwise a malicious or buggy VM could overwrite or read data in any other VM's memory. During setup, memory regions that are to be used as transfer buffers may be programmed into the IOMMU tables, which limit transfers initiated from a VM to only read and write data from its area to and from the target transfer buffers. In some examples, the buffers can also be dynamically allocated. For example, the buffers can be dynamically allocated just prior to a copy operation, rather than only at setup. Thus, IOMMU permissions may be granted at that time, and revoked when the transfer is complete.

The diagram of Fig. 1 is not intended to indicate that the example computer system 100 is to include all of the components shown in Fig. 1. Rather, the example computer system 100 may have fewer or additional components not illustrated in Fig. 1 (e.g., additional virtual machines, vSwitches, etc.).

Fig. 2 is a flow chart illustrating an example method of performing communication between virtual machines. The example method is referred to generally by the reference number 200 and can be implemented in the computer system of Fig. 1. In particular, method 200 may be implemented using the vSwitch of Fig. 1 above. For example, the method 200 may illustrate packet flow between VMs on the same computer system 100.

In block 210, a request to transmit a packet from a first virtual machine (VM1) to a second virtual machine (VM2) is received. A transmission (TX) packet for transmission is provided to the first virtual machine VM1 and a virtual network interface controller (vNIC) driver of VM1.

In block 220, the vNIC driver of VM1 (VM1-vNIC) queues the TX packet to be transmitted. In some examples, the protocol stack can send a scatter-gather list to the vNIC driver with instructions for processing. For example, the processing may include a TCP checksum offload. In some examples, the vNIC driver can read the processing instructions and prepare descriptors for each element of the scatter-gather list. For example, the descriptors can be used to define the data and control for the packet and elements such address, length, and required processing. In some examples, after the descriptors are complete, the descriptors can be enqueued for transmission. For example, in the case of a physical NIC, the descriptors can be used for DMA operations. In case of vNIC to vSwitch environments, however, the descriptors can be used to inform the vSwitch of the packet location and control information.

In block 230, a virtual switch (vSwitch) driver reads a transmission (TX) queue of VM1. In some examples, the vSwitch driver can monitor traffic that is within the network. The vSwitch driver can then detect that the TX packet that has been queued up in memory and recognizes that the packet has another destination within the system.

In block 240, the vSwitch driver recognizes and determines the destination of the packet, which is another VM on the computer system, VM2. For example, the vSwitch driver may perform some discovery, read the VM1 transmission (TX) queue, and determine that the packet that is stored in VM1 memory is to be copied to VM2 memory.

In block 250, the vSwitch driver queues operation of a DMA device. In some examples, a packet may have three scatter elements. For example, a source address and a length for these elements may be provided in block 230 as described above. The destination for the elements may also have been determined at block 240. In some examples, given this information, the device driver for the DMA device can enqueue three copy commands to the DMA device. For example, each command can include the source address, destination address, and the given number of bytes to copy. In some examples, a command may also further include packet processing control information. For example, the processing control information can include cryptographic operations, encapsulation, or compression. These packet processing operations could result in a size of the packet in the destination that is different from the size of the packet at the source.

In block 260, the DMA engine copies the packet to the destination in VM2. For example, DMA device may copy the packet to the destination without the use of any CPU resources. Thus, with a DMA device operation, the CPU may not touch the data. The data may also not be brought into the core's cache. Therefore, there may be no CPU stalls and no cache pollution related to the copy operation.

In block 270, the vSwitch driver indicates to VM1 that transmission is complete. For example, an interrupt can be processed after it is communicated that the packet has been copied from memory in VM1 to memory in VM2 without the packet being put on the wire.

In block 280, the vSwitch driver writes the reception (RX) descriptor into the vNIC RX queue on VM2. The reception (RX) descriptor tells VM2 what has been put in VM2's receive buffer. The reception (RX) descriptor may include control information, such as the number of bytes or type of header associated with the packet.

In block 290, the vSwitch driver indicates a receive event to vNIC on VM2. The receive event may signal a receive interrupt. The VM2, as the receiver, can be informed that a receive event has been delivered to its receive buffer. The VM2 can then read its receive buffer as described in the descriptor and complete the processing. In some examples, the vSwitch driver may also perform stack processing. Operation concludes in block 292.

The flow chart of Fig. 2 is not intended to indicate that the example method 200 is to include all of the components shown in Fig. 2. Rather, the example method 200 may have fewer or additional blocks not illustrated in Fig. 2.

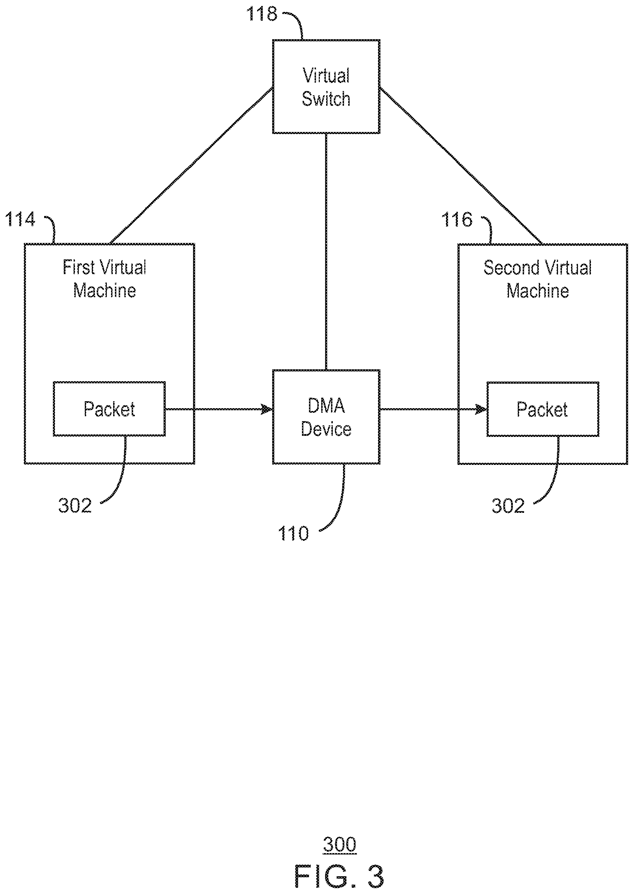

Fig. 3 is an example system for transferring a packet via a direct memory access engine. The example system is generally referred to using the reference number 300 and can be implemented using the methods 200, 400 of Figs. 2 and 4. For example, the system 300 can be implemented in the computer system 100 of Fig. 1 above.

In Fig. 3, a packet 402 is shown being transferred from a first virtual machine 114 to a second virtual machine 116 via a direct memory access (DMA) device 110. For example, the DMA device 110 may be a DMA engine. In some examples, the virtual switch 118 can detect that the packet 402 is to be sent from the first virtual machine 114 to the second virtual machine 116. For example, the virtual switch 118 can read a transmission queue of the first virtual machine 114 and detect that a packet 302 is to be sent to a second virtual machine 116 on the same computing device. The virtual switch 118 can then queue a direct memory copy operation in the DMA device 110. The DMA device 110 can then copy the first virtual machine 114 directly to the second virtual machine 116. For example, the packet may not need to travel via the virtual switch 118 or any processor. Thus, processing resources may be used for other operations while the DMA device copies the packet 402 from the first virtual machine 114 to the second virtual machine 116.

The diagram of Fig. 3 is not intended to indicate that the example computer system 300 is to include all of the components shown in Fig. 3. Rather, the example computer system 300 may have fewer or additional components not illustrated in Fig. 3 (e.g., additional virtual machines, virtual switches, packets, etc.).

Fig. 4 illustrates an example method for transferring a packet. The method is generally referred to using the reference number 400 and can be implemented using the computer system of Fig. 1. In particular, method 400 may be implemented using the vSwitch of Fig. 1 above.

In block 402, the vSwitch reads a transmission queue of a first virtual machine. For example, a vSwitch may recognize a transmission packet that is within a queue in memory of a first virtual machine.

In block 404, the vSwitch determines a destination of a packet associated with the transmission queue of the first virtual machine. In some examples, the destination may be the memory of a second virtual machine on the computer system. For example, by reading the transmission queue of the first virtual machine, the vSwitch driver may determine that the packet is destined for the memory of the second virtual machine.

In block 406, the vSwitch may queue operation of a direct memory access device. For example, the vSwitch driver may queue a direct memory copy operation of a DMA device.

In block 408, the direct memory access device is used to copy the packet from the first virtual machine to a second virtual machine. For example, the DMA device may copy the packet from memory in VM1 to memory in VM2 without any involvement of a CPU.

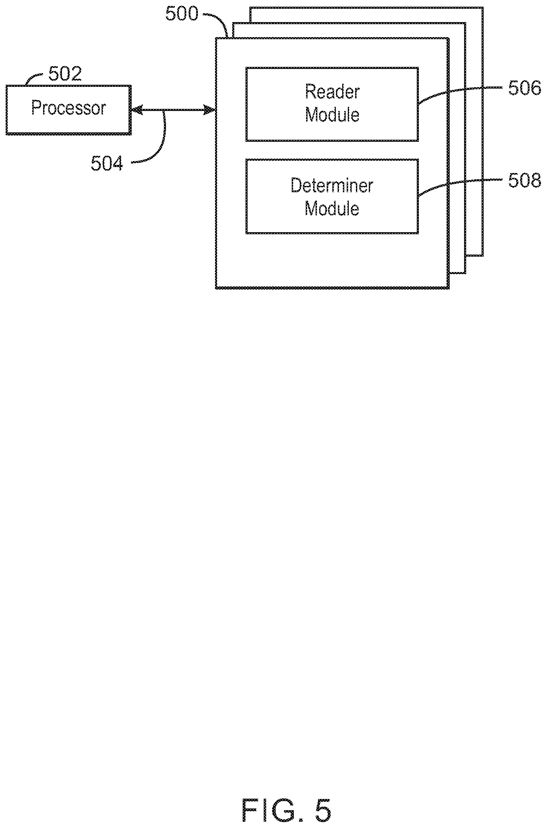

Fig. 5 is a block diagram showing computer readable media 500 that store code for performing communication between virtual machines. The computer readable media 500 may be accessed by a processor 502 over a computer bus 504. Furthermore, the computer readable medium 500 may include code configured to direct the processor 502 to perform the methods described herein. In some embodiments, the computer readable media 500 may be non-transitory computer readable media. In some examples, the computer readable media 500 may be storage media.

The various software components discussed herein may be stored on one or more computer readable media 500, as indicated in Fig. 5. For example, a reader module 506 may be configured to read a transmission queue of a first virtual machine. In some examples, the reader module 506 may also be configured to causing a hypervisor to run each of the first virtual machine and the second virtual machine. In some examples, the reader module 506 may also be configured to cause a vSwitch to detect a transmission packet is within a queue in memory of a first virtual machine. In some examples, the reader module 506 may be configured to read a transmission queue of the first virtual machine via a vSwitch driver. A determiner module 508 may be configured to detect a destination of a packet associated with the transmission queue of the first virtual machine. For example, the destination may be the memory of a second virtual machine on the computer system. The determiner module 508 may be configured to determine that the packet is destined for the memory of the second virtual machine. In some examples, the determiner module 508 may determine that the second virtual machine is a destination of the packet via a vSwitch driver. The determiner module 508 may also be configured to queue a direct memory copy operation of a direct memory access device. For example, the direct memory access device may be a direct memory access engine. In some examples, the direct memory access device the direct memory access device may lack a central processing unit. In some examples, determiner module 508 may also be configured to queue a direct memory copy operation of a direct memory access device via a vSwitch driver. The determiner module 508 may also be configured to cause the direct memory access device to copy the packet from the first virtual machine to a second virtual machine. In some examples, the determiner module 508 may be configured to indicate to the first virtual machine that the copying of the packet is complete. In some examples, the determiner module 508 may also be configured to write a receive descriptor into a virtual network interface controller (vNIC) receive queue in the second virtual machine.

The block diagram of Fig. 5 is not intended to indicate that the computer readable media 500 is to include all of the components shown in Fig. 5. Further, the computer readable media 500 may include any number of additional components not shown in Fig. 5, depending on the details of the specific implementation.

The technical benefits of the techniques described herein may thus include relieving the virtual switch layer bottleneck, thereby improving performance and scaling. For example, since a CPU is not relied upon to perform packet copying, packets may not be copied though the virtual switch layer, which relieves the bottleneck. Another benefit is that processor interconnect congestion is relieved. For example, because a processor is not used for packet copying, less data flows through processor interconnects, thereby relieving congestion. Yet another benefit is that CPU resources are more efficiently used due to the CPU not performing copying. For example, the CPU time may be available for other functions. A further benefit is that peripheral bus bandwidth is not used in the techniques described herein. For example, because packets are copied directly from one VM's memory to another VM's memory, the packets do not travel on the peripheral bus. Still another benefit is that the security risk of transmitting packets over NIC/networks is lowered. For example, NIC/networks may be susceptible to being accessed by malicious actors, who pose security risks. Thus, because the packets are not transmitted on the wire or over NIC/networks, the packets are less liable to be intercepted by such malicious actors.

In addition, the packet transfers, unlike software copies in the protocol stack, may be sent to peripheral devices via DMA operations. In some examples, the stack may be already designed for packet transfer processes to be asynchronous. The transmitting VM may continue to do productive work while the packet is queued and transferred. Similarly, the receiving VM may be available for tasks during the transfer, and may only become aware of the received packet after the transfer is complete. Thus, the CPU core that can be used for other operations may not be needlessly occupied in copying the packet.

Not all components, features, structures, characteristics, etc. described and illustrated herein need be included in a particular aspect or aspects. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

It is to be noted that, although some aspects have been described in reference to particular implementations, other implementations are possible according to some aspects. Additionally, the arrangement and/or order of circuit elements or other features illustrated in the drawings and/or described herein need not be arranged in the particular way illustrated and described. Many other arrangements are possible according to some aspects.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

It is to be understood that specifics in the aforementioned examples may be used anywhere in one or more aspects. For instance, all optional features of the computing device described above may also be implemented with respect to either of the methods or the computer-readable medium described herein. Furthermore, although flow diagrams and/or state diagrams may have been used herein to describe aspects, the techniques are not limited to those diagrams or to corresponding descriptions herein. For example, flow need not move through each illustrated box or state or in exactly the same order as illustrated and described herein.

The techniques described herein are not restricted to the particular details listed. Indeed, those skilled in the art having the benefit of this disclosure will appreciate that many other variations from the foregoing description and drawings may be made within the scope of the techniques described herein. Accordingly, it is the following claims including any amendments thereto that define the scope of the techniques described herein.

## Claims

1. A computer system (101) for transferring a packet, comprising:
a hypervisor (112) to run a first virtual machine (114) and a second virtual machine (116);
a first memory address space (104) associated with the first virtual machine to store the packet;
a second memory address space (104) associated with the second virtual machine to receive and store the packet; and
a virtual switch (118) coupled to the first virtual machine and the second virtual machine to detect that the packet is to be sent from the first virtual machine to the second virtual machine;
wherein, the computer system is **characterised by** further comprising:
a direct memory access device (110) to copy the packet from the first memory address space to the second memory address space via the direct memory access device; and
a virtual switch driver to write a receive descriptor into a virtual network interface controller, vNIC, receive queue in the second virtual machine, and to indicate a receive event to vNIC on the second virtual machine.

2. The computer system of claim 1, wherein the first virtual machine and the second virtual machine are to run on the same computing device.

3. The computer system of any combination of claims 1-2, comprising an input-output memory management unit, IOMMU, to re-map host addresses of the virtual machines to input-output, IO, devices.

4. The computer system of any combination of claims 1-3, wherein the direct memory access device lacks a central processing unit.

5. The computer system of any combination of claims 1-4, wherein the virtual switch driver is operable to read a transmission queue of the first virtual machine.

6. The computer system of any combination of claims 1-5, wherein the virtual switch driver is operable to queue a direct memory copy operation of the memory access device.

7. The computer system of any combination of claims 1-6, wherein the virtual switch driver is operable to detect that the second virtual machine is a destination of the packet.

8. The computer system of any combination of claims 1-7, wherein the virtual switch driver is operable to indicate to the first virtual machine that the copying of the packet is complete.

9. A method (400) for transferring a packet between virtual machines, comprising:
reading (402) a transmission queue of a first virtual machine;
detecting (404) a destination of a packet associated with the transmission queue of the first virtual machine;
queuing (406) operation of a direct memory access device;
using (408) the direct memory access device to copy the packet from the first virtual machine to a second virtual machine via the direct memory access device;
writing, via a virtual switch driver, a receive descriptor into a virtual network interface controller, vNIC, receive queue in the second virtual machine; and
writing, via the virtual switch driver, a receive event to vNIC on the second virtual machine.

10. The method of claim 9, wherein the first virtual machine and the second virtual machine run on the same computing device.

11. The method of any combination of claims 9-10, comprising running, via a hypervisor, each of the first virtual machine and the second virtual machine.

12. The method of any combination of claims 9-11, wherein the direct memory access device lacks a central processing unit.

## Patentansprüche

1. Computersystem (101) zum Übertragen eines Pakets, umfassend:
einen Hypervisor (112) zum Ausführen einer ersten virtuellen Maschine (114) und einer zweiten virtuellen Maschine (116);
einen ersten Speicheradressraum (104) in Zusammenhang mit der ersten virtuellen Maschine zum Speichern des Pakets;
einen zweiten Speicheradressraum (104) in Zusammenhang mit der zweiten virtuellen Maschine zum Empfangen und Speichern des Pakets; und
einen virtuellen Switch (118), der mit der ersten virtuellen Maschine und der zweiten virtuellen Maschine gekoppelt ist, um zu detektieren, dass das Paket von der ersten virtuellen Maschine zu der zweiten virtuellen Maschine gesendet werden soll;
wobei das Computersystem **dadurch gekennzeichnet ist, dass** es ferner umfasst:
eine Direktspeicherzugriffsvorrichtung (110) zum Kopieren des Paktes aus dem ersten Speicheradressraum in den zweiten Speicheradressraum über die Direktspeicherzugriffsvorrichtung; und
einen virtuellen Switch-Treiber zum Schreiben eines Empfangsdeskriptors in eine Empfangswarteschlange einer virtuellen Netzwerkschnittstellensteuerung, vNIC, in der zweiten virtuellen Maschine und zum Anzeigen eines Empfangsereignisses zu der vNIC an der zweiten virtuellen Maschine.

2. Computersystem nach Anspruch 1, wobei die erste virtuelle Maschine und die zweite virtuelle Maschine auf derselben Computervorrichtung auszuführen sind.

3. Computersystem nach einer beliebigen Kombination der Ansprüche 1-2, umfassend eine Eingabe-Ausgabe-Speicherverwaltungseinheit, IOMMU, zur Neuzuordnung von Hostadressen der virtuellen Maschinen zu Eingabe-Ausgabe-, IO-, Vorrichtungen.

4. Computersystem nach einer beliebigen Kombination der Ansprüche 1-3, wobei die Direktspeicherzugriffsvorrichtung keine zentrale Verarbeitungseinheit aufweist.

5. Computersystem nach einer beliebigen Kombination der Ansprüche 1-4, wobei der virtuelle Switch-Treiber dazu betreibbar ist, eine Übertragungswarteschlange der ersten virtuellen Maschine auszulesen.

6. Computersystem nach einer beliebigen Kombination der Ansprüche 1-5, wobei der virtuelle Switch-Treiber dazu betreibbar ist, einen Direktspeicherkopiervorgang der Speicherzugriffsvorrichtung in eine Warteschlange zu stellen.

7. Computersystem nach einer beliebigen Kombination der Ansprüche 1-6, wobei der virtuelle Switch-Treiber dazu betreibbar ist, zu detektieren, dass die zweite virtuelle Maschine ein Ziel des Pakets ist.

8. Computersystem nach einer beliebigen Kombination der Ansprüche 1-7, wobei der virtuelle Switch-Treiber dazu betreibbar ist, der ersten virtuellen Maschine anzuzeigen, dass das Kopieren des Pakets abgeschlossen ist.

9. Verfahren (400) zum Übertragen eines Pakets zwischen virtuellen Maschinen, umfassend:
Auslesen (402) einer Übertragungswarteschlange einer ersten virtuellen Maschine;
Detektieren (404) eines Ziels eines Pakets in Zusammenhang mit der Übertragungswarteschlange der ersten virtuellen Maschine;
Stellen in eine Warteschlange (406) eines Vorgangs einer Direktspeicherzugriffsvorrichtung;
Verwenden (408) der Direktspeicherzugriffsvorrichtung zum Kopieren des Paktes von der ersten virtuellen Maschine zu einer zweiten virtuellen Maschine über die Direktspeicherzugriffsvorrichtung;
Schreiben, über einen virtuellen Switch-Treiber, eines Empfangsdeskriptors in eine Empfangswarteschlange einer virtuellen Netzwerkschnittstellensteuerung, vNIC, in der zweiten virtuellen Maschine; und
Schreiben, über den virtuellen Switch-Treiber, eines Empfangsereignisses zu der vNIC an der zweiten virtuellen Maschine.

10. Verfahren nach Anspruch 9, wobei die erste virtuelle Maschine und die zweite virtuelle Maschine auf derselben Computervorrichtung ausgeführt werden.

11. Verfahren nach einer beliebigen Kombination der Ansprüche 9-10, umfassend Ausführen, über einen Hypervisor, jeder der ersten virtuellen Maschine und der zweiten virtuellen Maschine.

12. Verfahren nach einer beliebigen Kombination der Ansprüche 9-11, wobei die Direktspeicherzugriffsvorrichtung keine zentrale Verarbeitungseinheit aufweist.

## Revendications

1. Système informatique (101) destiné à transférer un paquet, comportant :
un hyperviseur (112) servant à exécuter une première machine virtuelle (114) et une seconde machine virtuelle (116) ;
un premier espace (104) d'adresses de mémoire associé à la première machine virtuelle pour stocker le paquet ;
un second espace (104) d'adresses de mémoire associé à la seconde machine virtuelle pour recevoir et stocker le paquet ; et
un commutateur virtuel (118) couplé à la première machine virtuelle et à la seconde machine virtuelle pour détecter que le paquet doit être envoyé de la première machine virtuelle à la seconde machine virtuelle ;
le système informatique étant **caractérisé en ce qu'**il comporte en outre :
un dispositif (110) d'accès direct à la mémoire servant à copier le paquet du premier espace d'adresses de mémoire au second espace d'adresses de mémoire via le dispositif d'accès direct à la mémoire ; et
un pilote de commutateur virtuel servant à écrire un descripteur de réception dans une file d'attente de réception de contrôleur d'interface de réseau virtuel, vNIC, dans la seconde machine virtuelle, et à indiquer un événement de réception au vNIC sur la seconde machine virtuelle.

2. Système informatique selon la revendication 1, la première machine virtuelle et la seconde machine virtuelle devant s'exécuter sur le même dispositif informatique.

3. Système informatique selon une combinaison quelconque des revendications 1 à 2, comportant une unité de gestion de mémoire d'entrée-sortie, IOMMU, servant à retransposer des adresses d'hôte des machines virtuelles vers des dispositifs d'entrée-sortie, IO.

4. Système informatique selon une combinaison quelconque des revendications 1 à 3, le dispositif d'accès direct à la mémoire étant dépourvu d'unité centrale de traitement.

5. Système informatique selon une combinaison quelconque des revendications 1 à 4, le pilote de commutateur virtuel étant exploitable pour lire une file d'attente d'émission de la première machine virtuelle.

6. Système informatique selon une combinaison quelconque des revendications 1 à 5, le pilote de commutateur virtuel étant exploitable pour placer en file d'attente une opération de copie directe en mémoire du dispositif d'accès à la mémoire.

7. Système informatique selon une combinaison quelconque des revendications 1 à 6, le pilote de commutateur virtuel étant exploitable pour détecter que la seconde machine virtuelle est une destination du paquet.

8. Système informatique selon une combinaison quelconque des revendications 1 à 7, le pilote de commutateur virtuel étant exploitable pour indiquer à la première machine virtuelle que la copie du paquet est achevée.

9. Procédé (400) de transfert d'un paquet entre machines virtuelles, comportant les étapes consistant à :
lire (402) une file d'attente d'émission d'une première machine virtuelle ;
détecter (404) une destination d'un paquet associé à la file d'attente d'émission de la première machine virtuelle ;
placer (406) en file d'attente le fonctionnement d'un dispositif d'accès direct à la mémoire ;
utiliser (408) le dispositif d'accès direct à la mémoire pour copier le paquet de la première machine virtuelle à une seconde machine virtuelle via le dispositif d'accès direct à la mémoire ;
écrire, via un pilote de commutateur virtuel, un descripteur de réception dans une file d'attente de réception de contrôleur d'interface de réseau virtuel, vNIC, dans la seconde machine virtuelle ; et
écrire, via le pilote de commutateur virtuel, un événement de réception vers le vNIC sur la seconde machine virtuelle.

10. Procédé selon la revendication 9, la première machine virtuelle et la seconde machine virtuelle s'exécutant sur le même dispositif informatique.

11. Procédé selon une combinaison quelconque des revendications 9 à 10, comportant l'exécution, via un hyperviseur, de chacune de la première machine virtuelle et de la seconde machine virtuelle.

12. Procédé selon une combinaison quelconque des revendications 9 à 11, le dispositif d'accès direct à la mémoire étant dépourvu d'unité centrale de traitement.
